# DEMANDE DE BREVET EUROPEEN

(11) **EP 0 542 639 A1**
(43) Date de publication de la demande: **19.05.1993**
(21) Numéro de dépôt: 92420373.0
(22) Date de dépôt: 22.10.1992
(51) Int. Cl.: F16L 55/17

(54) **Structure complexe utilisable notamment pour la réfection de conduites et procédé d'obtention d'une telle structure**

(30) Priorité: 15.11.1991 FR 9114455
(71) Demandeur: ETABLISSEMENTS LES FILS D'AUGUSTE CHOMARAT & CIE. Société Anonyme, F-75008 Paris (FR)
(72) Inventeur: Chomarat, Gilbert, F-74260 Les Gets (FR); Chazel, Alain, F-69380 Lozanne (FR)
(74) Mandataire: Laurent, Michel

(57) **Abrégé**

Structure complexe utilisable notamment pour la réfection de conduites, du type constituée par un support textile comportant au moins une nappe fibreuse (7), constituée de fibres discontinues orientées au hasard les unes par rapport aux autres, et ce sensiblement dans le plan de ladite nappe, associée à des éléments de renfort (8) destinés à lui donner des caractéristiques mécaniques, ledit support étant recouvert sur au moins l'une de ses faces d'une couche superficielle étanche (2).

Elle se **caractérise** en ce que des éléments de renfort (8) associés à la nappe fibreuse ont une structure telle qu'ils assurent un blocage dimensionnel du complexe sous un effort de traction dans le sens longitudinal, tout en autorisant une certaine déformation (ou allongement) sous l'action de contraintes exercées dans le sens transversal.

## Description

Pour la réfection de conduites, ou ouvrages similaires (enterrés ou non), il a été proposé depuis fort longtemps, ainsi que cela ressort notamment du brevet britannique 1 340 068, de recouvrir la surface interne de l'ouvrage d'un matériau complexe flexible comportant une membrane imperméable aux fluides et une structure de base fibreuse qui est imprégnée d'une résine synthétique non réticulée, et après placage dudit complexe contre la suface de l'ouvrage à réparer, à provoquer la réticulation de la résine de manière à former un "manchonnage" interne. Pour la mise en oeuvre d'une telle technique, utilisée avec succès de nos jours, l'un des principaux problèmes qui se posent est celui de la réalisation du complexe structure fibreuse/couche superficielle imperméable, étant donné qu'il doit non seulement présenter des caractéristiques mécaniques suffisantes pour permettre sa mise en place à l'intérieur de l'ouvrage, mais également avoir une structure fibreuse épaisse ayant une structure permettant une répartition homogène de la résine et qui doit pouvoir se déformer radialement pour épouser les irrégularités de la surface à l'intérieur de l'ouvrage à rénover, tout en ayant une surface d'écoulement lisse.

Or, on a trouvé, et c'est ce qui fait l'objet de la présente invention, un perfectionnement apporté aux matériaux en nappes utilisés pour la réfection de conduites ou ouvrages similaires du type comportant une structure de base fibreuse, susceptible d'être imprégnée avec une résine dont les propriétés (durcissement) peuvent être révélées ultérieurement, et dont l'une des faces est recouverte d'une membrane imperméable qui, non seulement, permet de résoudre l'ensemble de ces problèmes, mais qui par ailleurs, peut être réalisé selon un procédé simple, facile à mettre en oeuvre, conduisant à l'obtention de complexes très réguliers, facilement reproductibles.

D'une manière générale, la structure complexe conforme à l'invention est du type constitué par un support textile comportant au moins une nappe fibreuse constituée de fibres discontinues orientées au hasard les unes par rapport aux autres, et ce sensiblement dans le plan de ladite nappe, associée à des éléments de renfort destinés à lui donner des caractéristiques mécaniques appropriées, ledit support étant recouvert sur au moins l'une de ses faces d'une couche superficielle étanche, et elle se caractérise en ce que des éléments de renfort sont associés à la nappe fibreuse, lesdits éléments ayant une structure telle qu'ils assurent un blocage dimensionnel du complexe sous un effort de traction dans le sens longitudinal, tout en autorisant une certaine déformation (ou allongement) sous l'action de contraintes (traction) exercées dans le sens transversal (ou déformation radiale si la structure est tubulaire).

Avantageusement et en pratique :
- la structure à base de fibres discontinues est constituée par au moins un mat de fibres de verre ;
- la structure de renforcement est constituée par au moins une série de mèches filamentaires disposées dans le sens long à la surface de la structure fibreuse, soit éventuellement par un tissu chaîne et trame constitué de telles mèches ;
- la liaison entre les éléments précités (nappes fibreuses discontinues/renfort) est obtenue par couture-tricotage, les colonnes de mailles étant disposées dans le sens longitudinal du complexe.

Un tel complexe est obtenu selon un procédé qui fait également partie de l'invention et qui consiste à associer, par calandrage, un support textile et un film de matière thermoplastique, la calandre utilisée comportant un cylindre métal lisse et un contre-cylindre revêtu d'une couche de caoutchouc siliconé, le support textile étant en contact avec le contre-rouleau alors que le film est en contact avec le rouleau métallique lors de l'association, ledit procédé se caractérisant en ce que l'appel du complexe (support textile, film de recouvrement) à la sortie de la calandre, est réalisé en maintenant l'ensemble sous une force de traction la plus élevée possible.

Il a été constaté, qu'en procédant d'une telle manière, on obtenait un article complexe dont une face conserve toutes ses caractéristiques textiles et ce sur pratiquement sur toute son épaisseur, et dont l'autre face est recouverte d'une couche d'enduction formant un film imperméable, parfaitement lisse en surface et ne pénétrant que légèrement en profondeur à l'intérieur du support textile de base. Par ailleurs, les caractéristiques mécaniques d'un tel complexe sont telles qu'il présente une résistance à l'allongement et à la traction supérieure dans le sens long par rapport à celle dans le sens transversal, ce qui le rend particulièrement adapté pour l'application en cause et autorise une certaine déformation radiale lorsque le complexe est mis sous une forme tubulaire lors de son utilisation.

L'invention et les avantages qu'elle apporte seront cependant mieux compris grâce aux exemples de réalisation donnés ci-après à titre indicatif, mais non limitatif, et qui sont illustrés par les schémas annexés dans lesquels :
- la figure 1 illustre de manière schématique la manière dont est réalisé un matériau complexe conforme à l'invention ;
- la figure 2 illustre de manière schématique, en perspective, la structure d'un tel matériau.

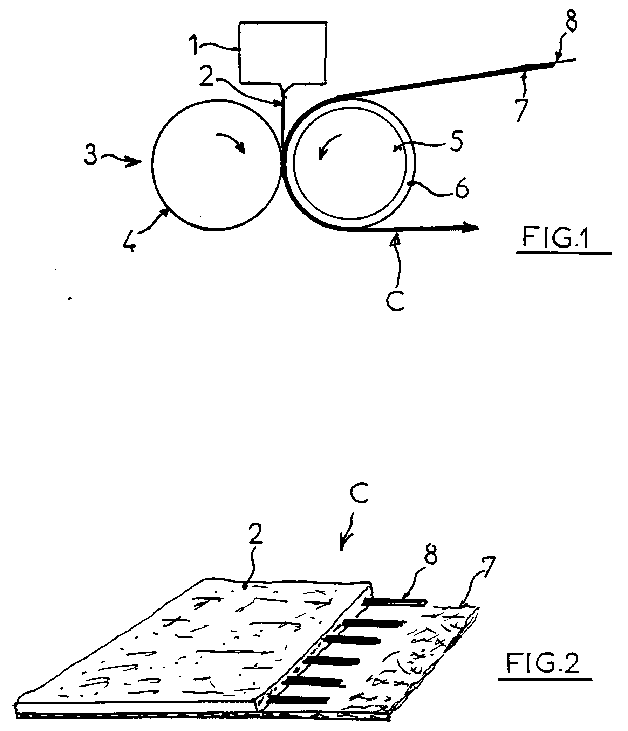

La figure 1 illustre la manière dont est réalisé un matériau conforme à l'invention.

D'une manière générale, si l'on se reporte à cette figure, pour la réalisation d'un matériau conforme à l'invention, on réalise de manière connue un complexe en associant par calandrage, un support textile et un film de matière thermoplastique (PVC notamment). Pour ce faire, l'installation comporte essentiellement une extrudeuse (1) conventionnelle permettant de produire un film (2), en PVC par exemple. A la sortie de cette extrudeuse (1), et le plus près possible de celle-ci, est disposée une calandre (3) comportant un cylindre (4) en métal et un contre-cylindre (5) recouvert d'un revêtement en caoutchouc (6) lui-même siliconé. La vitesse des cylindres de la calandre (3) est réglée de manière à produire un étirage du film produit entre la sortie de l'extrudeuse (1) et la ligne de pincement du film entre les cylindres (4) et (5). Il convient de noter que, conformément à l'invention, compte tenu de l'épaisseur du complexe textile, les cylindres (4) et (5) ne sont pas en contact mutuel, mais légèrement écartés l'un de l'autre d'une distance correspondant sensiblement à l'épaisseur finale du complexe support textile/film PVC. Selon l'invention, lors de l'association du complexe, désigné par la référence générale (C) et du film (2), on maintient le complexe (C) sous une tension maximale et, par ailleurs, on fait embarrer l'article enduit sortant de la calandre autour du contre-cylindre (5).

Conformément à l'invention, le support textile de base (C) est constitué essentiellement par une nappe fibreuse (7) constituée de fibres discontinues, orientées au hasard les unes par rapport aux autres. Comme fibres constituant une telle nappe fibreuse, on utilisera tout type de fibres connues, telles que fibres de verre, fibres chimiques en général, éventuellement en mélange. Eventuellement, il pourrait être envisagé d'utiliser une nappe fibreuse constituée par l'association de plusieurs mats différents, tels que par exemple un mat de verre aiguilleté avec un mat de fibres polyester. Cette nappe support est associée, conformément à l'invention, à des éléments de renfort (8) destinés à lui donner des caractéristiques mécaniques appropriées et, plus particulièrement, à lui communiquer une résistance à la traction telle que l'article produit ne puisse pratiquement pas s'allonger dans le sens longitdunal. De telles caractéristiques sont obtenues par exemple en associant à la nappe fibreuse (7) des mèches parallèles (8) de filaments de verre ou des tissus chaîne et trame également à base de mèches de verre. La liaison des deux éléments nappe fibreuse (7)/éléments de renfort (8), est obtenue selon la technique connue de couture/ tricotage (technique Malimo). Il est important que cette liaison soit réalisée de telle sorte que les chainettes soient orientées dans le sens longitudinal de l'article, ce qui concourre à bloquer le complexe dans le sens long. Il convient de noter que conformément à l'invention, le film (2) étanche associé audit complexe support (C) est formé sur la face comportant les éléments de renfort (8).

En procédant de cette manière, on obtient un complexe tel qu'illustré à la figure 2 comportant essentiellement un film (2) formant un enduit superficiel étanche, qui pénètre seulement sur une faible partie de l'épaisseur du support textile (essentiellement au niveau des éléments de renfort (8)), la structure fibreuse (7) conservant, quant à elle, toutes ses caractéristiques textiles permettant à la résine qui imprégne ladite structure et qui, en général, est incorporée après réalisation du complexe, de se répartir de manière homogène lorsque ses propriétés sont révélées lors de la mise en place du matériau pour la réfection de l'ouvrage, tel qu'une conduite.

### Exemple 1:

De la manière énoncée précédemment, on réalise un complexe comportant comme support textile de base (7), un mat de verre pesant 600 grammes/mètre carré, auquel sont associées des mèches longitudinales (8) également à base de verre, réparties régulièrement sur toute la largeur du support (7). Ces mèches sont réparties tous les cinq centimètres et ont une largeur d'environ deux millimètres. L'ensemble mèche (8)/mat non tissé (7) est lié par couture/tricotage (sur une machine type Malimo) au moyen de fils de liage en polyester. Le film extrudé (2) est un film de PVC qui, en sortie de l'extrudeuse (1), a une épaisseur d'environ 0,6 mm, qui subit un étirage à un taux de 2 , par suite de la vitesse d'appel du cylindre (4,5) de la calandre (3). L'appel du complexe (C) en sortie de la calandre est réalisé en exerçant une tension maximale à une vitesse de 3 mètres/minute. En sortie de la calandre, on obtient un complexe (C) du type illustré à la figure 2, comportant une surface étanche à base de PVC et ayant une épaisseur d'environ 0,3 mm, et une structure de base textile ayant quant à elle une épaisseur d'environ 0,2 mm. Un tel article présente comme caractéristique essentielle de ne pratiquement pas pouvoir se déformer dans le sens long, tout en conservant une possibilité de déformation dans le sens travers.

### Exemple 2:

On répète l'exemple 1, si ce n'est que la structure textile de renfort (8) est constituée uniquement par un tissu chaîne et trame, armure/toile, pesant 1000 grammes/mètre carré et à base de mèches de verre de 4800 tex (0,8 mèche/centimètre dans le sens trame et 1,2 mèche/centimètre dans le sens chaine).

En sortie de la calandre, on obtient un complexe pesant environ 1600 grammes, ayant une épaisseur totale d'environ 0,8 millimètre, la couche supérieure de PVC étanche ayant, quant à elle, une épaisseur d'environ 0,3 mm. Un tel complexe est également particulièrement adapté pour la réfection d'ouvrages, telles que des conduites.

### Exemple 3:

On répète l'exemple 1, si ce n'est que de part et d'autre de la nappe non tissée en verre (7), on dispose un tissu de verre tel que défini dans l'exemple 2.

En procédant de la manière décrite précédemment, on obtient en sortie de la calandre un complexe pesant environ 2600 grammes/mètre carré et ayant une épaisseur totale d'environ 1,5 millimètres.

### Exemple 4:

On répète l'exemple 1, mais le film extrudé est un film en polyéthylène basse densité. On obtient un complexe ayant des caractéristiques similaires à celles de l'exemple 1, mais qui peut être utilisé comme revêtement à l'intérieur de conduites d'eau potable compte tenu des propriétés de la couche polyéthylène basse densité.

Dans tous les exemples qui précèdent, on obtient des structures complexes telles qu'elles présentent une résistance à l'allongement et à la traction supérieure dans le sens long par rapport à celle dans le sens transversal, ce qui autorise une certaine déformation radiale lorsque le complexe est mis sous une forme tubulaire lors de son utilisation.

Bien entendu, l'invention n'est pas limitée aux exemples de réalisation décrits précédemment, mais elle en couvre toutes les variantes réalisées dans le même esprit.

## Revendications

**1/** Structure complexe utilisable notamment pour la réfection de conduites, du type constituée par un support textile comportant au moins une nappe fibreuse (7), constituée de fibres discontinues orientées au hasard les unes par rapport aux autres, et ce sensiblement dans le plan de ladite nappe, associée à des éléments de renfort (8) destinés à lui donner des caractéristiques mécaniques, ledit support étant recouvert sur au moins l'une de ses faces d'une couche superficielle étanche (2), **caractérisée** en ce que des éléments de renfort (8) associés à la nappe fibreuse ont une structure telle qu'ils assurent un blocage dimensionnel du complexe sous un effort de traction dans le sens longitudinal, tout en autorisant une certaine déformation (ou allongement) sous l'action de contraintes exercées dans le sens transversal.

**2/** Structure complexe selon la revendication 1, caractérisée en ce que la liaison de la nappe fibreuse (7) et des éléments de renfort (8), est réalisée par couture/tricotage, les colonnes de mailles étant disposées dans le sens longitudinal du complexe.

**3/** Structure complexe selon l'une des revendications 1 et 2, caractérisée en ce que la nappe fibreuse est constituée par au moins un mat de fibres de verre.

**4/** Structure complexe selon l'une des revendications 1 à 3, caractérisée en ce que la structure de renforcement (8) est constiutée par au moins une série de mèches filamentaires disposées dans le sens long à la surface de la structure fibreuse (7).

**5/** Structure complexe selon l'une des revendications 1 à 3, caractérisée en ce que la structure de renforcement (8) est constituée par au moins un tissu chaine et trame constitué de mèches de fils de verre disposées sur au moins une face de la nappe support non tissée (7).

**6/** Structure complexe selon l'une des revendications 1 à 3, caractérisée en ce que deux tissus chaine et trame sont disposés de part et d'autre de la nappe support (7).

**7/** Procédé pour l'obtention d'une structure complexe selon l'une des revendications 1 à 6, qui consiste à associer par calandrage un complexe (C) comportant une nappe fibreuse (7) combinée à des éléments de renfort (8) avec un film de matière thermoplastique au moyen d'une installation comportant essentiellement une extrudeuse (1), à la sorte de laquelle est disposée une calandre (3) comportant un cylindre (4) en métal et un contre-cylindre (5) recouvert d'un revêtement en caoutchouc (6), la vitesse des cylindres de la calandre (3) étant réglée de manière à produire un étirage du film produit entre la sortie (1) et la ligne de pincement du film entre les cylindres (4,5), caractérisé en ce que lesdits cylindres (4,5) ne sont pas en contact mutuel, mais légèrement écartés l'un de l'autre et en ce que, lors de l'association du complexe (C) avec le film (2), on maintient ledit complexe (C) sous une tension maximale en faisant par ailleurs embarrer l'article enduit sortant de la calandre autour du contre-cylindre (5).
